Europäisches Patentamt

European Patent Office

Office européen des brevets

(11) Veröffentlichungsnummer: **0 514 787 A2**

## EUROPÄISCHE PATENTANMELDUNG

(21) Anmeldenummer: **92108244.2**

(22) Anmeldetag: **15.05.92**

(51) Int. Cl.5: **G02F 1/01**, G02F 2/00

(30) Priorität: **24.05.91 DE 4117045**

(43) Veröffentlichungstag der Anmeldung:
**25.11.92 Patentblatt 92/48**

(84) Benannte Vertragsstaaten:
**AT BE CH DE FR GB IT LI NL**

(71) Anmelder: **SIEMENS AKTIENGESELLSCHAFT**
**Wittelsbacherplatz 2**
**W-8000 München 2(DE)**

(72) Erfinder: **Das, Chandan, Dipl.-Ing.**
**Laubenweg 4**
**W-8027 Neuried(DE)**

(54) **Endlos-Polarisationsregelung.**

(57) Insbesondere für optische Überlagerungsempfänger ist es notwendig, die Polarisation des lokal erzeugten Lichtes der des Empfangslichtes nachzuregeln. Die Polarisationsregelung erfolgt dabei durch Verstellung der Verzögerung doppelbrechender Elemente, die nach einer Anzahl gleichgerichteter Verstellschritte an eine Verstellgrenze gelangen können und zurückgestellt werden müssen. Dabei ergibt sich das Problem, daß schnelle Änderungen der Polarisation des Eingangslichtes auch während Rückstellphase berücksichtigt werden müssen, außerdem sollten auch nichtideale doppelbrechende Elemente verwendet werden. Erfindungsgemäß werden vier doppelbrechende Elemente verwendet, von denen die im Lichtweg ersten beiden Elemente der normalen Regelung und die beiden folgenden Elemente der Regelung während der Rückstellprozedur dienen.

FIG 2

EP 0 514 787 A2

Die Erfindung betrifft ein Verfahren zur Endlos-Polarisationsregelung entsprechend dem Oberbegriffs des Anspruchs 1.

Aus der EP-A1 0 248 234 ist ein Verfahren zur Polarisationsregelung eines Lichtsignals bekannt, bei dem das Lichtsignal drei doppelbrechende Elemente eines Polarisationstransformators durchläuft und die Doppelbrechungen der drei Elemente E1, E2, E3 in Abhängigkeit von Stellsignalen kontinuierlich verändert werden. In der Fig. 1 der vorliegenden Anmeldung ist die aus der vorerwähnten EP-A1 0 248 234 bekannte Anordnung zur Polarisationsregelung schematisch dargestellt. Die Stellsignale werden bei der bekannten Anordnung durch Vergleich der Polarisation wenigstens eines kohärenten Lichtsignals mit einem Referenzpolarisationszustand mittels eines Analysators oder eines in einem Überlagerungsempfänger angeordneten Richtkoppler RK erzeugt. Der Referenzpolarisationszustand ist dabei der Polarisationszustand eines zweiten Lichtsignals am Eingang LO, es kann aber auch der Polarisationszustand eines polarisationsselektiven Elementes verwendet werden. Unter Doppelbrechung eines Lichtsignals wird dabei und auch im folgenden die Phasen-Verzögerung verstanden, die zwischen den beiden Hauptachskomponenten eines durch ein doppelbrechendes Element durchlaufenden Lichtsignals feststellbar ist, diese beiden auch als Eigenmoden bezeichneten Komponenten unterscheiden sich in doppelbrechenden Elementen durch ihre Ausbreitungsgeschwindigkeit. Die Verzögerung D wird im folgenden als relative Verzögerung betrachtet und als Bruchteil der Lichtwellenlänge bzw. der Lichtphase angegeben.

Beim Anwendungsfall des optischen Überlagerungsempfangs besteht das Problem darin, daß ein empfangenes Lichtsignal mit unbekannter Polarisation und äußerst geringer Leistung mit dem von einem lokalen Laser erzeugten zweiten Lichtsignal bei gleicher Polarisation überlagert werden soll. Wegen der geringen Lichtleistung des Empfangslichtes ist es dabei zweckmäßig, das Licht des lokalen Lasers durch den Polarisationstransformator zu leiten, da dieses Licht mit ausreichendem Pegel zur Verfügung steht. Die Polarisationsregelung hat also in diesem Fall die Aufgabe, ein Lichtsignal mit einer festgelegten Polarisation in ein Lichtsignal mit einer gewünschten Polarisation in Abhängigkeit von der Polarisation des Empfangslichtsignals umzuformen.

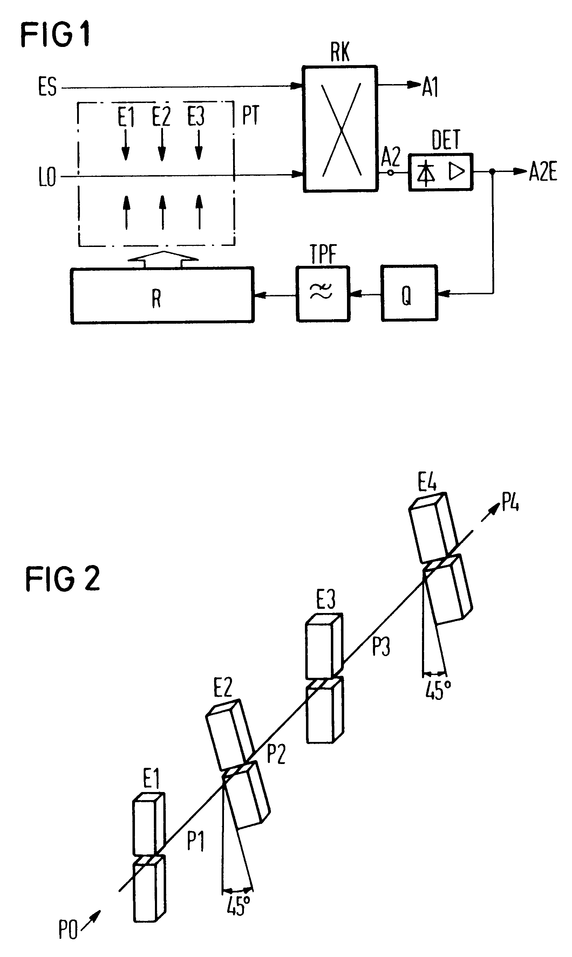

Die in der Fig. 1 dargestellte bekannte Anordnung zur Polarisationsregelung weist einen ersten Eingang ES auf, an dem das Empfangslichtsignal ansteht, das an den zugeordneten Eingang eines Richtkopplers RK weitergeleitet wird. Ein zweiter Eingang LO der Anordnung ist mit einem lokalen Laser verbunden und erhält von diesem ein Lichtsignal mit bekannter Polarisation und vergleichsweise hohe Leistung, das über einen Polarisationstransformator PT mit einem ersten, zweiten und dritten doppelbrechenden Element ES1, ES2, ES3 einem weiteren Eingang des Richtkopplers RK zugeführt wird. Neben dem ersten optischen Ausgang A1 für Meßzwecke enthält der Richtkoppler RK einen zweiten optischen Ausgang A2 für einen nachgeschalteten Detektor DET, der eine Fotodiode mit angeschlossenem Fotostromverstärker enthält. An den Detektorausgang A2E sind weitere Anordnungen zur Signalverarbeitung und ein Quadrierer Q als Teil der Anordnung zur Polarisationsregelung angeschlossen. Der Ausgang des Quadrierers Q ist über ein Tiefpaßfilter TPF mit einem Steuereingang eines Reglers R, der mindestens der drei in einer Stelleinrichtung enthaltenen doppelbrechende Elemente E1, E2, E3 ansteuert. Zusätzlich zu den vom Regler R erzeugten Stellsignalen zur Arbeitspunkteinstellung werden diesem vergleichsweise kleine Rechtecksignalen überlagert. Dadurch ergibt sich eine Rechteckmodulation der Doppelbrechungen und damit kleine Abweichungen von den Doppelbrechungsarbeitspunkten beispielsweise des ersten und des zweiten doppelbrechenden Elementes E1, E2, die sich in kleinen Intensitäts- also Leistungsänderungen des Überlagerungssignals auswirken. Durch die Quadrierung ergeben sich auswertbare Amplitudenänderungen des Eingangssignals des Reglers R. Vom Regler R werden daraus alle Ableitungen ersten und zweiten Grades der Intensität nach den Doppelbrechungen beispielsweise des ersten und des zweiten doppelbrechenden Elementes E1, E2 näherungsweise gebildet. Der Regler R gibt entsprechende Stellsignale ab, durch die die doppelbrechenden Elemente E1, E2 in Richtung des Gradienten aus Intensitätsänderung und Doppelbrechung verstellt werden. Durch die Auswertung der zweiten Ableitungen der Intensität nach der Doppelbrechung können dabei Sattelpunkte und Punkte minimaler Intensität des Überlagerungssignals erkannt und bei ungestörten Betrieb und weitab von den Bereichsgrenzen der Doppelbrechung der Elemente in Richtung auf ein Maximum verlassen werden. Bei maximaler Intensität des Überlagerungssignals stimmen die Polarisationszustände des Empfangslichtssignals und des lokal erzeugten Lichtsignals überein. Durch die Änderung des Polarisationszustandes des Empfangslichtsignales kann der Arbeitspunkt eines der beiden geregelten doppelbrechenden Elemente an die Verstellgrenze gelangen, so daß dieses betreffende Element zurückgestellt werden muß. Damit es während des Rückstellvorganges nicht zu unerwünschten Polarisationszuständen und damit zu Intensitätseinbrüchen am Ausgang des Richtkopplers RK kommt, wird der Rückstellvorgang mit einer Verstellung des bis dahin ungeregelten dritten doppelbrechenden Elementes E3 kombiniert. Voraussetzung für die Rückstellung ohne Intensitätseinbruch ist dabei, daß die Polarisation des Eingangslichtes, also die Soll-Polarisation der Polarisationsregelanordnung, sich während der Rückstellphase praktisch nicht ändert. Auftretende Änderungen werden erst nach Abschluß der Rückstellphase ausgeregelt, so daß bei einer sich vergleichsweise schnell ändernden Polarisation des Eingangslichtes dennoch Intensitätseinbrüche auftreten können. Die Funktion der beschriebenen bekannten Endlos-Polarisationsregelung basiert außerdem auf der Voraussetzung, daß drei ideale doppelbrechende Elemente verwendet werden können und daß die Bereichsgrenzen und die Rückstellpunkte exakt eingestellt werden. Liegen diese Voraussetzungen nicht vor, kann es auch bei konstanter Sollpolarisation in der Rückstellphase zu Regelschwierigkeiten kommen.

Die Aufgabe bei der vorliegenden Erfindung besteht also darin, eine Endlos-Polarisationsregelung zu finden, die schnelle Änderungen der Polarisation des Eingangslichtes auch während der Rückstellphase eines der doppelbrechenden Elemente berücksichtigen kann, außerdem sollten auch nichtideale doppelbrechende Elemente verwendet werden können und auch für die Einstellung der Bereichsgrenzen und der Rückstellpunkte sollte ein ausreichender Toleranzbereich vorliegen.

Erfindungsgemäß wird die Aufgabe bei dem eingangs genannten Verfahren zur Endlos-Polarisationsregelung dadurch gelöst, daß dieses durch die im Kennzeichen des Patentanspruchs 1 angegebenen Merkmale weitergebildet ist.

Von besonderem Vorteil beim erfindungsgemäßen Verfahren sind die vergleichsweise kleinen Stellbereiche für die einzelnen doppelbrechenden Elemente die die Skalierungsgenauigkeit und die Betriebssicherheit erhöhen. So ist bei den häufig als doppelbrechende Elemente verwendeten Faserquetschern schnell die Gefahr der Faserzerstörung bei höheren Druckkräften gegeben, Flüssigkristallelemente erfordern bei größeren Stellbereichen häufig eine große Dicke, so daß sich eine stark verringerte Stellergeschwindigkeit ergibt. Durch die kleineren Stellbereiche werden auch die erforderlichen Ansteuerleistungen geringer. Beim erfindungsgemäßen Verfahren ergibt sich außerdem der Vorteil, daß nur das unmittelbar dem Polarisationstransformatoreingang nachgeschaltete doppelbrechende Element eine relavanten Skalierung im Hinblick auf die Punkte H und V für die lineare Polarisation auf der Poincare-Kugel bedarf. Dies fällt insofern leicht, als das erste doppelbrechende Element von den weiteren doppelbrechenden Elementen unbeeinflußt ist und mit nur einem minimalen Stellbereich auskommt. Das erfindungsgemäße Verfahren besitzt nur eine, für alle doppelbrechenden Elemente gemeinsame Rückstellprozedur, wobei der Rückstellvorgang selbst wege optimiert ist, so daß einerseits der Aufwand für die Ausbildung des Reglers R vergleichsweise gering ist und andererseits nur geringe Verstellungen der doppelbrechenden Elemente, die während der Rückstellprozedur eventuell zurückgenommen werden müssen, vorgenommen werden. Weiterhin bietet das erfindungsgemäße Verfahren die Möglichkeit, zusätzlich die in der deutschen Patentanmeldung P 41 04 366.9 beschriebenen Maßnahmen gegen eine Blockierung der Polarisationsregelung anzuwenden.

Zweckmäßige Ausbildungen des erfindungsgemäßen Verfahrens werden in den Patentansprüchen 2 bis 4 näher beschrieben.

Die Erfindung soll im folgenden anhand eines in der Zeichnung dargestellten Ausführungsbeispiels näher erläutert werden. Dabei zeigt

Fig. 1 die schematische Darstellung einer bekannten Anordnung zur Polarisationsregelung für den optischen Überlagerungsempfang,

Fig. 2 den Aufbau eines Polarisationstransformators aus vier Faserquetschern als linear doppelbrechende Elemente,

Fig. 3 die Verstellmöglichkeiten von einer Eingangs- in eine andere Ausgangspolarisation für das erste doppelbrechende Element im Polarisationstransformator nach der Fig. 2,

Fig. 4 die Bereichsgrenzen für den Ausgangspolarisationszustand nach dem zweiten doppelbrechenden Element des Polarisationstransformators nach der Fig. 2,

Fig. 5 Beispiele für Veränderungen der Ausgangspolarisation des ersten doppelbrechenden Elementes der Fig. 2 nach der Rückstellprozedur und

Fig. 6 die Erläuterung der Möglichkeiten zur Weiterregelung während des Rückstellvorganges für das dritte und vierte doppelbrechende Element der Fig. 2.

Die Fig. 1 ist bereits bei der Darstellung des Standes der Technik im einzelnen beschrieben worden, so daß an dieser Stelle nicht weiter darauf eingegangen werden soll.

In der Fig. 2 ist ein erfindungsgemäßer Polarisationstransformator mit vier Stellelementen beschrieben, bei denen es sich um vier sogenannte Faserquetscher handelt, die über einen ausreichend großen Stellbereich als linear doppelbrechende Elemente wirken. Der an sich bekannte Faserquetscher besteht aus einem Relais, bei dem zwischen dem beweglichen Anker und einem unbeweglichen Teil ein Lichtwellenleiter angeordnet ist, auf den der Anker in Abhängigkeit von dem das Relais durchfließenden elektrischen Strom ein mehr oder weniger großen mechanischen Druck ausübt. Durch diesen Druck werden die beaufschlagten Teile des Lichtwellenleiters doppelbrechend, aus Festigkeitsgründen ist der maximal ausübbare Druck und damit die maximal erzeugbare Doppelbrechung begrenzt. Zur Druckerzeugung können anstelle der Relais auch piezo-elektrische Elemente verwendet werden, mit denen höhere Einstellgeschwindigkeiten erreichbar sind. Die Erfindung ist auch in Verbindung mit Polarisationstransformatoren realisierbar, bei denen die benötigten linear doppelbrechenden Elemente in integrierter Optik mittels auf einem Substrat aufgebrachtem Lithiumniobat hergestellt werden.

In der Fig. 2 ist mit P0 der Polarisationszustand am Eingang des Polarisationstransformators, also vor dem ersten doppelbrechenden Element E1 bezeichnet. Der Polarisationszustand am Ausgang des ersten linear doppelbrechenden Elementes E1 ist mit P1 bezeichnet, dies ist der Eingangspolarisationszustand für das zweite doppelbrechende Element E2, das gegenüber dem ersten doppelbrechenden Element E1 in einer Richtung um 45° verdreht ist, so daß die auf den Lichtwellenleiter ausgeübte Kraft mit dem entsprechenden Winkel wirkt. Der Ausgangspolarisationszustand des zweiten doppelbrechenden Elementes E2 ist mit P2 bezeichnet, dies ist gleichzeitig der Eingangspolarisationszustand des dritten linear doppelbrechenden Elementes E3, dessen Druckrichtung mit der des ersten doppelbrechenden Elementes E1 übereinstimmt. Der Ausgangspolarisationszustand des dritten doppelbrechenden Elementes E3 ist mit P3 bezeichnet, dies ist der Eingangspolarisationszustand für das vierte linear doppelbrechende Element E4, dessen Druckrichtung mit der des zweiten doppelbrechenden Elementes E2 übereinstimmt und das ein Lichtsignal mit einem Polarisationszustand P4 an den Ausgang des Polarisationstransformators abgibt. Durch die Verdrehung des zweiten und des vierten doppelbrechenden Elementes E2, E4 um 45° ergibt sich eine unterschiedliche Lage der Drehachsen der Doppelbrechung bezogen auf die Poincarè-Kugel von 90° für jeweils zwei benachbarte doppelbrechende Elemente.

Im Normalbetrieb werden das erste und das zweite doppelbrechende Element E1, E2 mit Stellsignalen vom Regler R beaufschlagt, während das dritte und das vierte doppelbrechende Element E3, E4 in ihrer Ruhestellung etwa in der Mitte ihres Verstellbereiches bei ungeradzahligen Vielfachen von $\pi/2$ festgeklemmt sind, so daß die zugehörigen Relaiswicklungen von einem festeingestellten elektrischen Strom durchflossen werden.

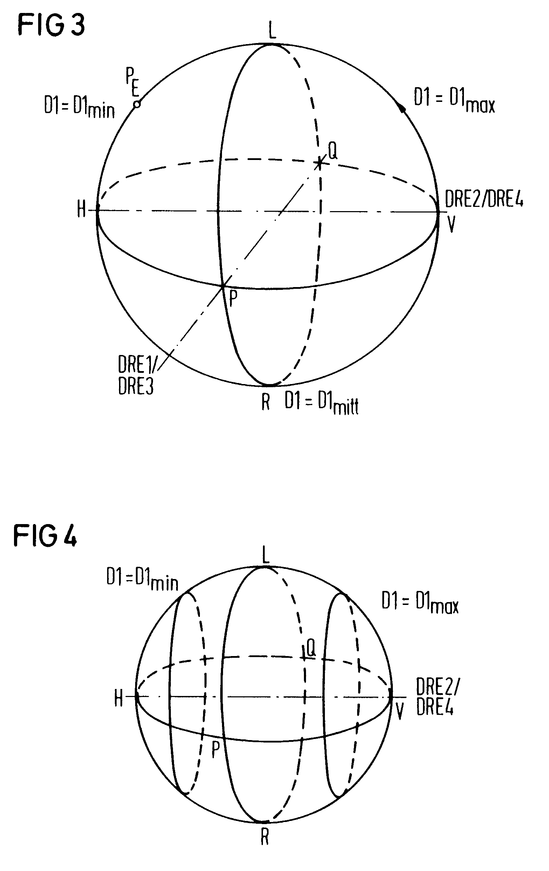

Zur Erläuterung der Funktion des Polarisationstransformators nach der Fig. 2 dienen die Poincarè-Kugeldarstellungen in den Figuren 3 bis 6.

In der Fig. 3 ist ein Beispiel für die Verstellmöglichkeiten von der Eingangspolarisation P0 des ersten doppelbrechenden Elementes E1 in dessen Ausgangspolarisation P1 dargestellt. Auf der Poincarè-Kugel sind verschiedene Punkte eingezeichnet, die bestimmten Polarisationen entsprechen. Die beiden Polpunkte der Poincarè-Kugel entsprechen zirkular polarisierten Lichtwellen, wobei dem Punkte L eine linksdrehende und dem Punkte R rechtsdrehende zirkulare Polarisation entspricht. Der Punkt H bezeichnet horizontale und der Punkt V vertikale Polarisation, während die Punkte P und Q Durchstoßpunkte der Drehachsen DRE1, DRE3 des ersten und des dritten doppelbrechenden Elementes E1, E3 durch die Poincarè-Kugeloberfläche darstellen. Am Punkte Q tritt dabei lineare Polarisation mit -45° und am Punkte P lineare Polarisation mit +45° Polarisationswinkel auf.

Das erste doppelbrechende Element E1 ist so gewählt, daß die Eingangspolarisation P0 dieses Elementes, die auf dem Großkreis durch die Punkte L, H, R, V zwischen den Punkten L und H liegt, entlang dem Großkreis bis zu einer Stelle zwischen den Punkten V und L transformiert wird. Für den Stellbereich des ersten doppelbrechenden Elementes E1 gilt demnach, daß dessen minimal einstellbare Verzögerung $D1_{min} \geq 0$ ist und die Differenz zwischen der maximal einstellbaren und der minimal einstellbaren Verzögerung $D1_{max} - D1_{min}$ im Bereich zwischen $\pi$ und $2\pi$ liegt. Dabei ist wünschenswert, daß die maximal und die minimal einstellbare Verzögerung $D1_{max}$ und $D1_{min}$ näher an den Punkten V bzw. H, also näher an der horizontalen Ebene liegen, da dies die Weiterregelfähigkeit des dritten und des vierten doppelbrechenden Elementes E3, E4 während des Rückstellvorganges des ersten und des zweiten doppelbrechenden Elementes E1, E2 begünstigt. Durch größere Stellbereiche der Verzögerung D1 des ersten doppelbrechenden Elementes E1 wird die Hysterese des ersten doppelbrechenden Elementes zwischen aufeinanderfolgenden Rückstellauslösungen vergrößert.

Die Drehachse DRE2 des zweiten doppelbrechenden Elementes E2 durchstößt an den Punkten H und V die Oberfläche der Poincarè-Kugel und steht damit senkrecht auf der Drehachse DRE1 für das erste doppelbrechende Element E1. Entsprechend sind die Verstellwege des zweiten doppelbrechenden Elementes E2 auf der Poincarè-Kugel parallel zu dem durch die Punkte L, P, R und Q definierten Großkreis. Für den Stellbereich des zweiten doppelbrechenden Elementes, also der Differenz zwischen der mit $D2_{max}$ bezeichneten maximal einstellbaren und der mit $D2_{min}$ minimal einstellbaren Verzögerung gilt

$D2_{max} - D2_{min} > 2\pi$ und für
$D2_{min} = \pi/4 \quad (2 K_1 + 1)$ und für
$D2_{max} = \pi/4 \quad (2 K_2 + 1),$

4

wobei diese Bedingungen nur ungefähr eingehalten werden müssen und $K_1$ eine ganze Zahl größer Null oder Null und $K_2$ eine ganze Zahl größer Null ist. Im Hinblick auf möglichst sichere Verstellungen des dritten und des vierten doppelbrechenden Elementes in der Rückstellphase ist dabei darauf zu achten, daß sowohl bei minimaler Verzögerung $D2_{min}$ des zweiten doppelbrechenden Elementes E2 als auch bei maximaler Verzögerung $D2_{max}$ die Polarisation P2 näher an den durch die Punkte LHVR gehenden Großkreis der Poincarè-Kugel als an den durch die Punkte HPVQ gehenden Großkreis transformiert wird.

Während der Regelung kann es durch fortlaufende Verstellungen des ersten oder des zweiten doppelbrechenden Elementes in der gleichen Richtung zur Annäherung und zum Überschreiten einer Bereichsgrenze für die Verstellung kommen.

In der Fig. 4 sind die Bereichsgrenzen des Polarisationszustandes P2 der Lichtwelle am Ausgang des zweiten doppelbrechenden Elementes nach der Fig. 2 dargestellt. Angegeben sind dabei in der Fig. 4 die Überlauf- bzw. Unterlaufstellen für die Verzögerung D1 des ersten doppelbrechenden Elementes, bei denen es sich um zum Großkreis LPRQ parallele Kreise in der Nähe der Punkte H bzw. V handelt, die Verzögerung D2 des zweiten doppelbrechenden Elementes hat dabei innerhalb seiner Bereichsgrenzen einen beliebigen Wert. Entsprechende Bereichsgrenzen lassen sich für die Verzögerung des zweiten doppelbrechenden Elementes E2 angeben.

Wahlweise bei Erreichen oder bei Überschreiten der vorgegebenen Bereichsgrenzen wird vom Regler R eine Rückstellprozedur für das erste und das zweite doppelbrechende Element E1, E2 eingeleitet. Dabei werden zunächst das dritte und das vierte doppelbrechende Element E3, E4 nicht mehr mit dem Stellsignal für die jeweilige Ruhestellung sondern mit einem entsprechenden Regelsignal beaufschlagt. Die Ruhestellungen $D3_{mitt}$ fürdas dritte und $D4_{mitt}$ für das vierte doppelbrechende Element liegen normalerweise bei etwa

$$D3_{mitt} = D4_{mitt} = \pi/2\,(2\,k_3 + 1),$$

wobei $k_3$ eine ganze Zahl größer Null ist.

Für das in der Fig. 4 dargestellte Ausführungsbeispiel gilt die folgende Dimensionierung:

$$D1_{min} = 0,\ D1_{max} = 1{,}5\pi,$$
$$D2_{min} = \pi/4,\ D2_{max} = 2{,}75\pi,$$
$$D3_{mitt} = 1{,}5\pi\ \text{und}\ D4_{mitt} = 1{,}5\pi.$$

Die Verzögerung D2 des zweiten doppelbrechenden Elementes ist bei diesem Beispiel im Bereich zwischen $0{,}25\pi$ und $2{,}75\pi$ an beliebiger Stelle.

Für die weiteren Ausführungen wird zunächst angenommen, daß das erste doppelbrechende Element E1 seine vorgegebene Bereichsgrenze überschreitet, die Überlegungen sind in analoger Weise auch auf das zweite doppelbrechende Element E2 übertragbar.

Bei der Einleitung der Rückstellprozedur werden aus den zu diesem Zeitpunkt vorliegenden Verzögerungen D1 bzw. D2, die im folgenden als $D1_{alt}$ bzw. $D2_{alt}$ bezeichnet werden, $D1_{ziel}$ und $D1_{neu}$ bzw. $D2_{neu}$ bestimmt. Allgemein wird $D1_{ziel}$ als die Verzögerung des ersten doppelbrechenden Elementes E1 bestimmt, bei der die Polarisation P1 der von diesem Element abgegebene Lichtwelle zum nächstgelegenen Äquatorpunkt H oder V der Poincarè-Kugel für den Verstellweg des ersten doppelbrechenden Elementes gelangt. Im Ausführungsbeispiel wird $D1_{ziel}$ auf den Wert $0{,}25\pi$ eingestellt, wenn die Verzögerung $D1 < D2_{mitt}$ ist, ein Wert von $1{,}25\pi$ wird für $D1_{ziel}$ ermittelt, wenn D1 größer oder gleich $D1_{mitt}$ ist.

Befindet sich die Polarisation P1 des vom ersten Element E1 abgegebenen Lichtes zum Zeitpunkt der Rückstellung um mehr als $\pi/2$ von $D1_{mitt}$ entfernt, dann wird $D1_{neu} \neq D1_{alt}$ eingestellt, ansonsten wird $D1_{neu} = D1_{alt}$ eingestellt. Im ersten Falle ist die Verzögerung des ersten Elementes E1 derart, daß durch sie die Polarisation P1 nach dem ersten doppelbrechenden Elementes E1 auf die andere Poincarè-Kugelhälfte gespiegelt wird, also die Polarisationen $P1_{alt}$ und $P1_{neu}$ auf unterschiedlichen Poincaré-Kugel hälften auftreten, wobei die Trennebene für beide Kugelhälften durch die Punkte H, P, V, Q definiert ist.

Bei der gewählten Dimensionierung ergibt sich

$$D1_{neu} = \begin{cases} \pi/2 - D1_{alt} & \text{für} \quad D1_{alt} < \pi/4 \\ D1_{alt} & \text{für} \quad \pi/4 < D1_{alt} \leq 1{,}25\pi \\ 2{,}5\pi - D1_{alt} & \text{für} \quad 1{,}25\pi < D1_{alt} \end{cases}$$

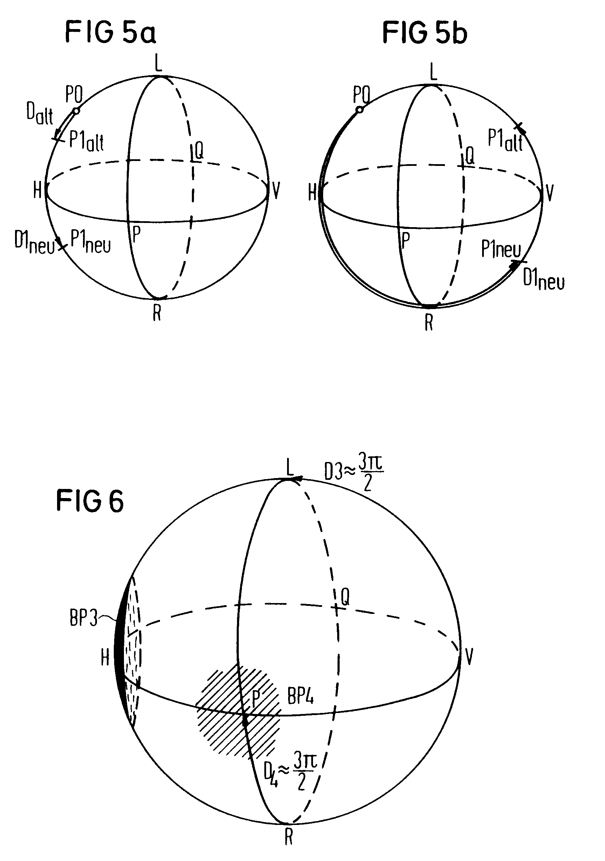

In der Fig. 5 sind die Verstellungen von $D1_{alt}$ in den zugehörigen $D1_{neu}$ für zwei Fälle dargestellt. Im Fall 5a befindet sich die Eingangspolarisation P0 und auch die Ausgangspolarisation $P1_{alt}$ auf dem zwischen den Punkten L und H befindlichen Großkreisbogen der Poincarè-Kugel. Der nächstgelegene Äquatorpunkt ist der Punkt H, über den dann die Rückstellung des ersten doppelbrechenden Elementes E1 zu einer neuen Ausgangsposition $P1_{neu}$ erfolgt, die resultierende Verzögerung $D1_{neu}$ ergibt sich aus der Differenz von $P1_{neu}$ und P0.

Im Falle der Fig. 5b liegt die Eingangspolarisation P0 etwa auf dem gleichen Wert wie bei der Fig. 5a, die Ausgangspolarisation $P1_{alt}$ vor der Rückstellung lag aber auf dem Großkreisbogen zwischen L und V, die entsprechende Verzögerung $D1_{alt}$ ergab sich dann aus der Differenz von $P1_{alt}$ und P0. In diesem Fall ist der Äquatorpunkt V der nächstgelegenere Punkt, die Rückstellung geht in Richtung dieses Punktes und, da sich $P1_{alt}$ um mehr als $\pi/2$ von $D1_{mitt}$ entfernt befindet, zur anderen Hälfte der Poincarè-Kugel, so daß sich nunmehr $P1_{neu}$ auf der unteren Poincarè-Kugelhälfte befindet und $D1_{neu}$ eine deutlich geringere Verzögerung als $D1_{alt}$ darstellt.

Im Hinblick auf die unterschiedlichen Möglichkeiten zur Einstellung des neuen Wertes $D2_{neu}$ der Verzögerung des zweiten doppelbrechenden Elementes E2 gilt die allgemeine Regel, daß diejenige Möglichkeit gewählt wird, die der Bereichsmitte zwischen $D2_{max}$ und $D2_{min}$ am nächsten kommt. Konkret wird, falls die Ausgangspolarisation P1 des ersten doppelbrechenden Elementes E1 in die untere Poincarè-Kugelhälfte gespiegelt werden muß:

$$D2_{neu} = \begin{cases} D2_{alt} + \pi & \text{für} \quad D2_{alt} < 1{,}5\pi \\ \\ D2_{alt} - \pi & \text{für} \quad D2_{alt} \geq 1{,}5\pi \end{cases}$$

Falls die Ausgangspolarisation P1 des ersten doppelbrechenden Elementes E1 nicht zu spiegeln ist, also $D1_{neu} = D1_{alt}$ ist, ergibt sich

$$D2_{neu} = \begin{cases} D2_{alt} + 2\pi & \text{für} \quad D2_{alt} < \pi/2 \\ D2_{alt} & \text{für} \quad \pi/2 \leq D2_{alt} \leq 2{,}5\pi \\ D2_{alt} - 2\pi & \text{für} \quad D2_{alt} > 2{,}5\pi \end{cases}$$

Nach der Bestimmung von $D1_{ziel}$, $D1_{neu}$ sowie $D2_{neu}$ nach den oben angegebenen Vorschriften läuft die Rückstellprozedur in folgenden Schritten ab. Zunächst wird die eigentliche Polarisationsregelung auf die zusätzlichen dritten und vierten doppelbrechenden Elemente E3 und E4 umgeschaltet. Im nächsten Schritt wird dann die Verzögerung D1 des ersten doppelbrechenden Elementes auf $D1_{ziel}$ verstellt. Im folgenden Schritt wird die Verzögerung des zweiten doppelbrechenden Elementes von D2 auf $D2_{neu}$ verstellt. Dieser Schritt ist unkritisch und erfolgt zügig, da die Eingangspolarisation P1 des zweiten doppelbrechenden Elementes E2 ein Eigenmodus desselben ist. Schließlich wird die Verzögerung D1 des ersten doppelbrechenden Elementes auf $D1_{neu}$ verstellt. Danach befindet sich die Polarisation des Ausgangssignals des zweiten doppelbrechenden Elementes wieder in demselben Zustand wie zum Zeitpunkt der Auslösung der Rückstellprozedur, während der Rückstellprozedur sind bei unverändertem Ausgangspolarisationszustand P4 des Polarisationstransformators auch das dritte und das vierte doppelbrechende Element E3, E4 zurückgestellt worden.

Die bereits beschriebenen Dimensionierungsvorschriften garantieren die Fähigkeit der Regelung des Polarisationszustandes P4 am Ausgang des Polarisationstransformators zu jedem Zeitpunkt. Außer den bereits erläuterten Maßnahmen lassen sich durch Modifikationen der Vorschriften zur Bestimmung der Verzögerungen $D1_{neu}$ bzw. $D2_{neu}$ des ersten bzw. zweiten doppelbrechenden Elementes der Bereich der garantierten Weiterregelbarkeit vergrößern, in diesem Bereich darf sich die Ausgangspolarisation P4 des Polarisationstransformators während der Rückstellung weiterbewegen. Die erste dieser Maßnahmen besteht darin, daß der Verstellweg von $D1_{ziel}$ auf $D1_{neu}$ während der Rückstellung begrenzt wird. Dafür kann folgende Regel herangezogen werden: Falls $D1_{neu} < D1_{mitt}$ ist, wird $D1_{neu}$ auf $D1_{mitt} - 0,4\pi$ eingestellt und falls $D1_{neu} \geq D1_{mitt}$ ist, wird $D1_{neu}$ auf $D1_{mitt} + 0,4\pi$ eingestellt. Anstelle des Wertes $0,4\pi$ kann dabei auch ein anderer im konkreten Fall besser geeigneter Wert gewählt werden. Als weitere Maßnahme zur Vergrößerung des Bereichs der Weiterregelbarkeit kann $D2_{neu}$ auf ein ganzes Vielfaches von $\pi$ eingestellt werden. Diese Maßnahmen sollen im folgenden in Verbindung mit der Fig. 6 erläutert werden. Wie bereits erwähnt, sind die Ruhestellungen für die Verzögerung des dritten und des vierten doppelbrechenden Elementes bei $\pi/2$ ($2 k_2 + 1$) gewählt, da hierdurch gewährleistet wird, daß das dritte und das vierte doppelbrechende Element E3, E4 die Regelung der Ausgangspolarisation P4 des Polarisationstransformators sofort nach Einleitung der Rückstellprozedur übernehmen können. Der Ausgangsbereich BP4 für die Weiterregelung während der Rückstellprozedur durch das dritte und das vierte doppelbrechende Element E3, E4 sind in der Fig. 6 im Bereich um den Punkt P dargestellt, da beim Ausführungsbeispiel die Verzögerungen D3 und D4 jeweils zu $1,5\pi$ gewählt wurden. Der Bereich BP3 der Ausgangspolarisation des zweiten doppelbrechenden Elementes umfaßt während der Rückstellprozedur einen eng begrenzten Bereich um den Punkt H auf der Poincarè-Kugel. Der Bereich BP3 kann aber auch um den Punkt V auf der Poincarè-Kugel liegen.

Bei Verwendung idealer doppelbrechender Elemente und entsprechender Dimensionierung der relevanten Parameter kann der Bereich BP3 nach dem ersten Schritt der Rückstellprozedur bis zum jeweils zentralen Punkt H oder V schrumpfen, so daß das dritte und das vierte doppelbrechende Element die Ausgangspolarisation P4 in jedem beliebigen Polarisationszustand erzeugen kann, diese Möglichkeit ergibt sich auch, wenn $D2_{neu}$ als ganzes Vielfaches von $\pi$ gewählt ist.

Nach Beendigung der Rückstellprozedur des ersten und des zweiten doppelbrechenden Elementes E1, E2 wird die Regelung der Ausgangspolarisation P4 wieder auf diese Elemente umgeschaltet, während das dritte und das vierte doppelbrechende Element E3, E4 solange verstellt werden, bis sie sich wieder in ihrer Ruhestellung befinden, also der Ausgangszustand wieder hergestellt ist. Im Falle kleiner Regelgüte, also vergleichsweise großer Abweichungen der Regelgröße vom Sollwert, kann die Regelung des dritten und vierten doppelbrechenden Elementes E3, E4 zusätzlich zu der ersten und zweiten Elementes E1, E2 wieder zugeschaltet werden. Eine ständige Regelung mit allen vier Elementen, bei denen der dritte und vierte Element E3, E4 in vergleichsweise engen Grenzen um deren Ruhestellungen verstellt werden, ist in bestimmten Fällen vorteilhaft. So kann damit eine nichtideale Eingangspolarisation oder eine nichtideale Lage der Drehachsen der ersten beiden Elemente E1, E2 durch eine 4-Elementregelung ausgeglichen werden.

Die beschriebene Endlos-Polarisationsregelung kann mit der in der deutschen Patentanmeldung P 41 04 366.9 beschriebenen Möglichkeit zur Erhöhung der Regelsicherheit kombiniert werden. So kann es aufgrund des in der dort genannten Patentanmeldung beschriebenen Regelverhaltens zu einer Blockierung des Regelsystems bekommen. Die Durchführungen der Maßnahmen gegen eine drohende Blockierung des Regelsystems sind bei der in der vorliegenden Patentanmeldung beschriebenen Endlos-Polarisationsregelung leicht möglich, da diese Regelung zu jedem Zeitpunkt unterbrochen und auch auf eine Regelung mit allen vier doppelbrechenden Elementen umgeschaltet werden kann.

**Patentansprüche**

**1.** Verfahren zur Endlos-Polarisationsregelung eines kohärenten Lichtsignals, das einen, doppelbrechende Elemente enthaltenden Polarisationstransformator durchläuft, bei dem die Doppelbrechungen der Elemente in Abhängigkeit von Stellsignalen kontinuierlich verändert werden, wobei die Elemente neben linearer auch elliptische oder zirkulare Doppelbrechung aufweisen können und die Stellsignale durch Vergleich des Polarisationszustandes des zu regelnden Lichtsignals mit einem Referenz-Polarisationszustand eines weiteren Lichtsignals oder eines polarisationsselektiven Elementes mittels eines Analysators oder eines Überlagerungsempfängers erzeugt werden und dabei die Intensität sowie die durch Modulation der Doppelbrechung wenigstens eines der doppelbrechenden Elemente auftretenden Änderungen der Intensität des Vergleichssignals bestimmt werden und daraus die Stellsignale erzeugt werden, die die Arbeitspunkte der Doppelbrechung von wenigstens zwei der doppelbrechenden Elemente so verstellen, daß dadurch die Intensität des Vergleichssignals wahlweise maximiert oder auf einen vorgegebenen Wert geregelt wird und daß bei Annäherung der Doppelbrechungs-Arbeitspunkte der einzelnen doppelbrechenden Elemente an deren Bereichsgrenzen oder bei Überschreiten dieser Bereichsgrenzen eine Rückstellprozedur eingeleitet wird,

**dadurch gekennzeichnet,**

daß einem ersten und einem zweiten im Normalbetrieb geregelten doppelbrechenden Element (E1, E2) im Lichtweg des Polarisationstransformators ein drittes und ein viertes doppelbrechendes Element (E3, E4) nachgeschaltet werden, deren Doppelbrechung im Normalbetrieb auf einem mittleren Wert festgestellt ist und die nur während der Rückstellung des ersten und/oder des zweiten doppelbrechenden Elementes (E1, E2) mit Stellsignalen der Polarisationsregelung beaufschlagt werden, daß die Drehachsen der Doppelbrechung des ersten und des dritten doppelbrechenden Elementes (E1, E3) wenigstens annähernd senkrecht auf den Drehachsen der Doppelbrechung des zweiten und des vierten doppelbrechenden Elementes (E2, E4) stehen,

daß der Stellbereich der Verzögerung des ersten doppelbrechenden Elementes

$$\pi \leq D1_{max} - D1_{min} \leq 2\pi \text{ und } D1_{min} \geq 0 \text{ ist,}$$

wobei

$D1_{max}$ die maximal einstellbare und $D1_{min}$ die minimal einstellbare Verzögerung des ersten doppelbrechenden Elementes ist, daß der Stellbereich des zweiten doppelbrechenden Elementes (E2) die Differenz aus der mit $D2_{max}$ bezeichneten maximal einstellbaren und der mit $D2_{min}$ minimal einstellbaren Verzögerung des zweiten doppelbrechenden Elementes ist, wobei

$$D2_{min} = \tfrac{\pi}{4}(2 K_1 + 1), \ D2_{max} = \tfrac{\pi}{4}(2 K_2 + 1), \ D2_{max} - D2_{min} > 2\pi \text{ sind}$$

und dabei $K_1$ gleich Null oder einer ganzen Zahl und $K_2$ eine ganze Zahl größer Null ist,

daß der Arbeitspunkt $D3_{mitt}$ des dritten doppelbrechenden Elementes im Normalbetrieb, also in Ruhestellung, sich ergibt zu

$$D3_{mitt} = \tfrac{\pi}{2}(2 K_3 + 1)$$

und entsprechend daß der Arbeitspunkt $D_{mitt}$ des vierten doppelbrechenden Elementes E4 in Ruhestellung sich bestimmt zu

$$D4_{mitt} = \tfrac{\pi}{2}(2 K_3 + 1)$$

wobei in beiden Fällen $k_3$ eine ganze Zahl größer als Null ist und daß die Rückstellprozedur wahlweise eingeleitet wird bei Erreichen oder bei Überschreiten der vorgegebenen Bereichsgrenzen.

**2.** Verfahren nach Patentanspruch 1,
**dadurch gekennzeichnet,**
daß die minimale Verzögerung $D1_{min}$ des ersten doppelbrechenden Elementes (E1) bei Null und die minimale Verzögerung $D2_{min}$ des zweiten doppelbrechenden Elementes (E2) bei $\pi/4$ liegt, daß die maximale Verzögerung $D1_{max}$ des ersten doppelbrechenden Elementes bei $1{,}5\pi$ und die maximale Verzögerung $D2_{max}$ des zweiten doppelbrechenden Elementes bei $2{,}75\pi$ liegt, daß die Ruhestellungen bzw. die mittleren Verzögerungen $D3_{mitt}$ und $D4_{mitt}$ bei $1{,}5\pi$ liegen.

**3.** Verfahren nach Patentanspruch 1,
**dadurch gekennzeichnet,**
daß der erforderliche Stellbereich für die Verzögerung (D1) des ersten doppelbrechenden Elementes (E1) von 0 bis $1{,}5\pi$, die maximale Verzögerung D2 des zweiten doppelbrechenden Elementes (E2) und die erforderlichen Verzögerungen D3, D4 des dritten und vierten doppelbrechenden Elementes (E3, E4) bei $2{,}75\pi$ liegen.

**4.** Verfahren nach Patentanspruch 1,
**dadurch gekennzeichnet,**
daß zu Beginn der Rückstellprozedur die Stellsignale für die Polarisationsregelung statt an das erste und das zweite doppelbrechende Element (E1, E2) nun an das dritte und das vierte doppelbrechende Element (E3, E4) abgegeben werden, daß in einem ersten Schritt die Verzögerung des ersten doppelbrechenden Elementes (E1) die Eingangspolarisation (P0) wenigstens annähernd in die Nähe eines Eigenmodus des zweiten doppelbrechenden Elementes (E2) transformiert und in einem zweiten Schritt die Verzögerung des zweiten doppelbrechenden Elementes (E2) in etwa in die Arbeitsbereichsmitte und anschließend in einem dritten Schritt der Arbeitsbereich für die Verzögerung des ersten doppelbrechenden Elementes (E1) so verstellt wird, daß trotz Rückstellung des dritten und des vierten doppelbrechenden Elementes (E3, E4) in deren Ruhestellungen die gewünschte Ausgangspolarisation erreicht wird.

5. Verfahren nach Patentanspruch 1,
   **dadurch gekennzeichnet,**
   daß bei nichtidealer Lage der Drehachsen der ersten beiden doppelbrechenden Elemente (E1, E2) oder der Eingangspolarisation (P0) zusätzlich zu diesen beiden Elementen auch das dritte und das vierte doppelbrechende Element (E3, E4) mit in die ständige Regelung einbezogen, aber nur in vergleichsweise engen Grenzen um die vorgegebenen Ruhestellungen verstellt werden.

## FIG 1

## FIG 2

## FIG 3

## FIG 4

## FIG 5a

## FIG 5b

## FIG 6